# EUROPEAN PATENT APPLICATION

(11) **EP 2 879 359 A1**
(43) Date of publication of application: **03.06.2015**
(21) Application number: 13195078.4
(22) Date of filing: 29.11.2013
(51) Int. Cl.: H04M 1/725, G06F 21/35, G06F 21/88, H04M 1/673

(54) **Method and arrangement for security measures in a mobile device**

(71) Applicant: Sony Corporation, Tokyo 108-0075 (JP)
(72) Inventor: dos Santos, Luiz Alberto, 224 68 Lund (SE); Terra Rios, Rodrigo, 211 57 Malmö (SE)
(74) Representative: Lindgren, Sven Erik Andreas

(57) **Abstract**

An object of the present invention is to provide a method in a mobile device that detects that the mobile device has been robbed or stolen.

The object is achieved by a method in the mobile device for recognizing a robbery of the mobile device. The method comprises registering (301) a mobility pattern behavior of the mobile device, based on signals obtained from at least one mobility sensor in the mobile device. The method further comprises detecting (302) a disruption from the registered pattern behavior and determining (305) whether or not the disruption is caused by a robbery event, based on if a correct identification code is received upon request.

## Description

### TECHNICAL FIELD

Embodiments herein relates generally to a mobile device and a method therein. In particular it relates to recognizing if the mobile device is being robbed.

### BACKGROUND

Mobile devices for communication such as terminals are also known as e.g. User Equipments (UE), mobile terminals, wireless terminals and/or mobile stations. Mobile devices are enabled to communicate wirelessly in a cellular communications network or wireless communication system, sometimes also referred to as a cellular radio system or cellular networks. The communication may be performed e.g. between two mobile devices, between a mobile device and a regular telephone and/or between a mobile device and a server via a Radio Access Network (RAN) and possibly one or more core networks, comprised within the cellular communications network.

Mobile devices may further be referred to as mobile telephones, cellular telephones, laptops, or surf plates with wireless capability, just to mention some further examples. The mobile devices in the present context may be, for example, portable, pocket-storable, hand-held, computer-comprised, or vehicle-mounted mobile devices, enabled to communicate voice and/or data, via the RAN, with another entity, such as another terminal or a server.

Such mobile devices are becoming more and more popular. Such widespread use has heightened concerns about loss and theft of such mobile devices. These concerns are amplified by the personal and confidential nature of the data stored on them.

An exponential increase in smart phone robberies is taking place in all around the world. Usually, the victim is using the mobile device in public when someone robs it from the user's hand and runs away.

Some security measures are known and take place after the mobile device has been robbed. This could be methods to track the mobile device via GPS (Global Positioning System), activate a camera to identify a person using the mobile device. The victim may also remotely lock the phone by e.g. IMEI (International Mobile Equipment Identity) blocking, erase its data etc.

However, there is a gap between the moment when the robbery takes place and the moment when the victim can effectively take any security measures. These minutes, perhaps hours, are of essential importance, since this is when the perpetrator can steal passwords, access bank information, make expensive calls etc.

### SUMMARY

It is therefore an object of embodiments herein to provide a way of improving the security measurements in a mobile device.

According to a first aspect of embodiments herein, the object is achieved by a method in a mobile device for recognizing a robbery of the mobile device. The mobile device is registering a mobility pattern behavior of the mobile device, based on signals obtained from at least one mobility sensor in the mobile device. The mobile device is further detecting a disruption from the registered pattern behavior and determines whether or not the disruption is caused by a robbery event, based on if a correct identification code is received upon request.

In accordance with a second aspect of an embodiment, a mobile device is provided to detect a robbery. The mobile device comprises a registering unit adapted to register a mobility pattern behavior of the mobile device based on signals obtained from at least one mobility sensor in the mobile device. The mobile device further comprises a detecting unit adapted to detect a disruption from the registered pattern behavior. The mobile device also comprises a determining unit adapted to determine whether or not the disruption is caused by a robbery event, based on if a correct identification code is received upon request.

Since the mobile device is able to detect a disruption from the mobility pattern, and since, the mobile device is able to determine if it has been robbed based on if a correct identification code has been received, the mobile device is able to detect that it has been robbed in a fast way. This results in that security measures can be taken faster.

An advantage with embodiments herein is that the mobile device is able to determine when it has been robbed at the same moment as the robbery takes place.

Another advantage with embodiments herein is that security measures such as tracking and shut down may be taken earlier.

A further advantage with embodiments herein is that the risk of having personal data stolen is lowered or avoid extra financial costs on the mobile subscription by avoiding unwanted phone calls.

### BRIEF DESCRIPTION OF THE DRAWINGS

Examples of embodiments herein are described in more detail with reference to attached drawings in which:
Figure 1 is a schematic block diagram illustrating a scenario according to embodiments herein;
Figure 2 is a schematic block diagram illustrating another scenario according to embodiments herein;
Figure 3 is a flowchart depicting embodiments of a method in a mobile device; and
Figure 4 is a schematic block diagram illustrating the mobile device according to some embodiments.

### DETAILED DESCRIPTION

As part of developing embodiments herein, some problems will first be identified and discussed.

As described above a disadvantage with the prior art is that it will take minutes or hours until security measures can be taken. If the security measures such as those described above could be taken as early as possible that would be advantageous for the victim.

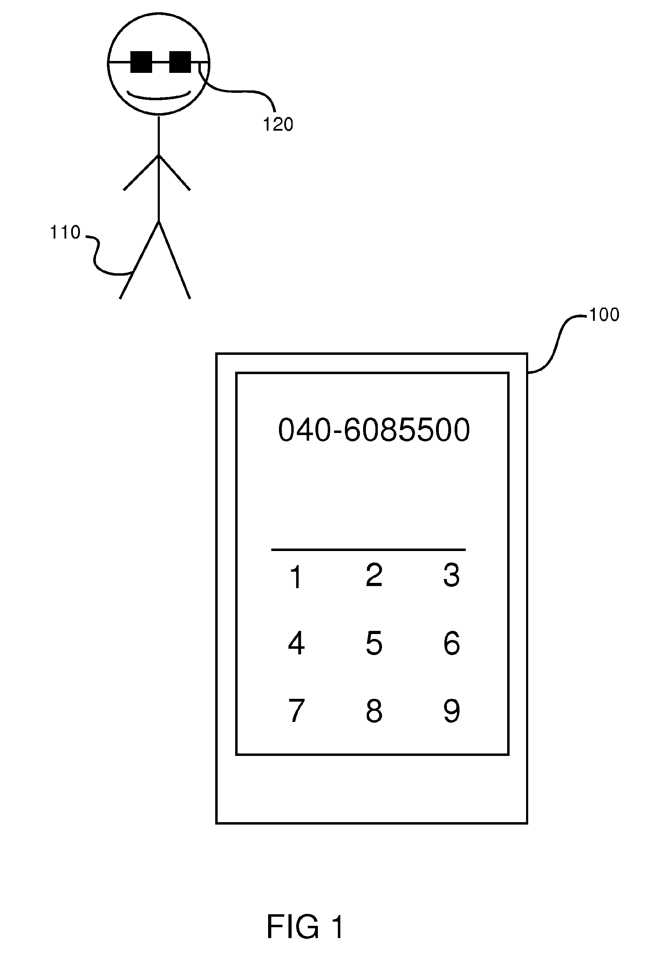

Embodiments will now be described with reference to figure 1. Figure 1 illustrates a mobile device 100. The mobile device 100 may be a mobile phone, mobile terminal, tablet, laptop or any other kind of equipment. The mobile device 100 is operated by a **user 110.** When the user 110 uses the mobile device 100 the mobile device 100 is able to register a mobility pattern of the mobile device 100. The mobility pattern may e.g. be how the user 110 moves the mobile device 100 or moves together with the mobile device 100. The registered mobility pattern may e.g. include information how fast the mobile device 100 moves and accelerates in different situations, in compared to how the mobile device moves according to a normal behavior The mobility pattern may be registered on a one time basis or may be registered continuously. The mobile device 100 may use different mobility sensors to detect the mobility pattern. The sensors are able to determine parameters such as speed or acceleration of the mobile device. The mobility sensors may e.g. be GPS, accelerometers, gyros. How these mobility sensors work are known in the art. The mobile device 100 may also use information regarding how the mobile device 100 moves relating to other devices when registering the mobility pattern. The mobile device 100 may e.g. be connected to a **second device 120** such as an accessory device. The second device 120 may comprise a sensor. The second device 120 may be connected to the mobile device 100 via a wireless link such as Bluetooth or WLAN (Wireless Local Area Network) The second device 120 may e.g. be a wearable device such as a headset, a watch, glasses, or any other device. The mobility pattern registered by the mobile device 100 may include information how the mobile device 100 moves in relation to the second device 120. If the radio conditions between the mobile device 100 and the second device 120 is becoming worse this may indicate that the mobile device 100 and the second device 120 moves away from each other. The radio condition may include parameters such as received signal strength, Doppler shift or any other signal quality parameter.

If the mobile device 100 registers a disruption in the mobility patterns this may mean that someone has stolen the mobile device 100 and quickly runs away. The disruption of the mobility pattern may be an abrupt movement of the mobile device 100 registered by the mobility sensors or any other unusual behavior. This disruption of the mobility pattern may also be that the mobile device 100 is dropped to the ground and comes to an abrupt stop.

If the mobile device 100 detects a disruption of the mobile device 100 this may be due to that the mobile device 100 has been robbed. To determine if the mobile device 100 has been robbed, the mobile device 100 requests an identification code from the user 110. The user 110 should then enter the identification code to confirm that the mobile device 100 has not been robbed. The identification code may be entered on a keypad or on a touch screen on the mobile device 100. The identification code may also be entered on another device connected to the mobile device. How this may be performed will be described below. If the correct identification code is not received within a certain time the mobile device 100 may take security measures such as tracking or locking the mobile device 100.

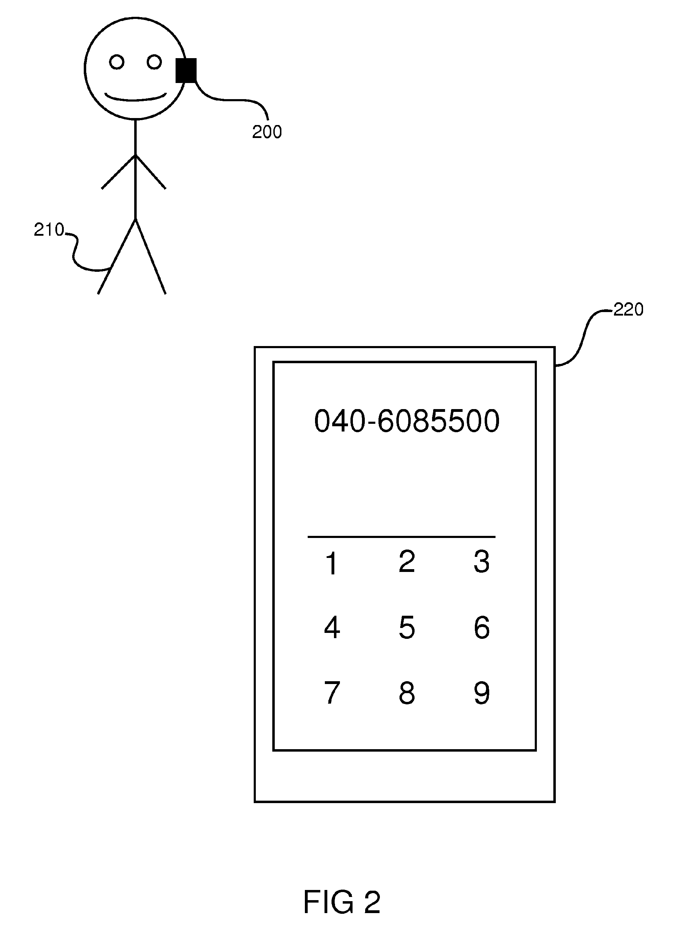

As described above, it is not necessary that the identification code is entered on the mobile device. **Figure 2** describes another scenario illustrating this. In figure 2 the **mobile device 200** is an accessory device, used by a **user 210,** and connected to a **third device 220.** In this scenario the mobile device 200 may be a wearable device such as a headset, a watch, glasses, or any other device similar to the second device 120 in figure 1, while the third device 220 may be a mobile phone, a tablet a laptop. The mobile device 200 comprises mobility sensors and is able to register a mobility pattern of the mobile device 200. If a disruption of the mobility pattern is detected, the mobile device 200 sends a request to the third device 220 indicating that a disruption of the mobility pattern has been detected and that an identification code is requested. The disruption of the mobility pattern may be that an abrupt movement such as a robbery of the mobile device 200 has occurred. The third device 220 then asks the user 210 to enter the identification code on the third device 220. The identification code may be entered using a key pad or on a touch screen on the third device 220. The third device 220 then sends the identification code to the mobile device 200. If the mobile device 200 receives a correct identification code the mobile device 200 assumes that the mobile device 200 has not been robbed but if a non-correct identification code is received or if no identification code is received at all, the mobile device 200 assumes that it has been robbed and may take security measures such as tracking or locking the mobile device 200.

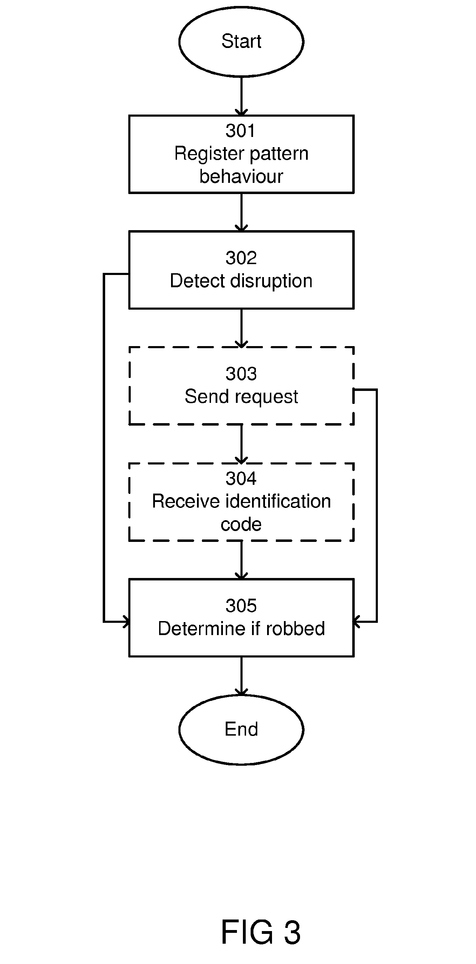

A series of method steps in the mobile device 100,200 for recognizing if the mobile device 100, 200 is robbed will now be described with reference to a flow chart depicted in **figure 3****.** The method comprises the following actions, which actions may be taken in any suitable order. The actions may also be combined. Dashed lines of some boxes in figure 3 indicate that this action is not mandatory.

### Action 301

To find out if the mobility pattern differs from a normal mobility pattern, the mobile device 100, 200 needs to register a mobility pattern to compare with. Thus, the mobile device 100, 200 registers the mobility pattern behavior of the mobile device 100, 200, based on signals obtained from at least one mobility sensor in the mobile device 100, 200. The mobility sensor is able to register how the mobile device 100, 200 moves and how fast in a normal situation. The mobility sensor may e.g. be GPS, accelerometers, gyros.

### Action 302

The mobile device 100, 200 detects a disruption from the registered pattern behavior. This disruption from the registered pattern behavior may e.g. be that someone takes the mobile device 100, 200 and quickly runs away. It may e.g. be the user 110, 210 or a thief running away with the mobile device 100, 200. If an accelerometer is used to register the pattern behavior, the disruption is detected if the acceleration of the mobile device 100, 200 is larger than the normal registered pattern. Another way to detect the disruption is to determine the speed of the mobile device 100, 200. This may e.g. be done using a GPS. A disruption from the registered pattern may be that the speed of the mobile device 100, 200 is higher than it usually is.

### Action 303

In this action an identification code will be requested.

In some embodiments, such as the embodiment relating to figure 1 the mobile device 100 asks the user 110 to enter the identification code. The request may be displayed on a display of the mobile device 100. The identification code may be entered on a keypad or a touch screen in the mobile device 100.

In some embodiments, such as the embodiment described in relation to figure 2 the mobile device 200 is an accessory device communicating with the third device 220. In these embodiments the mobile device 200 may send to the third device 220 an indication of the detected disruption from the registered pattern behavior and a request for an identification code. The third device 220 may receive the request and may then ask the user 210 to enter the identification code as described above. The identification code may be the PIN (Personal Identification Number) code or any other code agreed upon by the mobile device 200 and the user 210. Such examples could be screen pattern, finger print, iris recognition, among other identifications methods.

### Action 304

In this action the identification code will be obtained.

In the embodiments relating to figure 1, the identification code may be entered on a keypad or a touch screen in the mobile device 100.

In the embodiments relating to figure 2, the user may then enter the identification code on the on the third device 220. The third device 220 may send the identification code to the mobile device 200. The mobile device 200 may then receive the response from the third device 220 comprising the requested identification code.

### Action 305

The mobile device 100, 200 determines whether or not the disruption is caused by a robbery event, based on if a correct identification code is received upon request. The mobile device 100, 200 checks if the identification code is valid. If no identification code is obtained or if an incorrect identification code is received, the mobile device 100, 200 determines that the disruption is caused by a robbery event.

If a correct identification code is obtained the mobile device 100, 200 determines that the disruption is not caused by a robbery event. Based upon if the mobile device 100, 200 receives a correct identification code or not, the mobile device 100, 200 will be able to quickly determine if it has been robbed and also take security measures accordingly.

If a correct identification code has not been received after a predetermined amount of time, the mobile device 100, 200 may take security measures automatically. The predetermined time amount may e.g. be a minute.

It is more likely that the mobile device 100, 200 is robbed when the user 110, 210 is using the mobile device 100, 200. So when the mobile device 100, 200 is determining whether or not the disruption is caused by a robbery event, the determination may further be based on if the mobile device 100, 200 is in active mode or not. It is more common that the mobile device 100, 200 is robbed when the user 110, 210 is using it actively such as for a phone call, gaming or for internet devices.

In some embodiments the mobile device 100, 200 determines whether or not the disruption is caused by a robbery event further based on if a radio link between the mobile device 100 and a second device 120 has changed conditions. The changed condition may e.g. be caused by that the distance between the mobile device 100, 200 and the second device 120 or the third device 220 is increasing or that one of them are moving with a high speed. This may indicated that one of the devices is robbed.

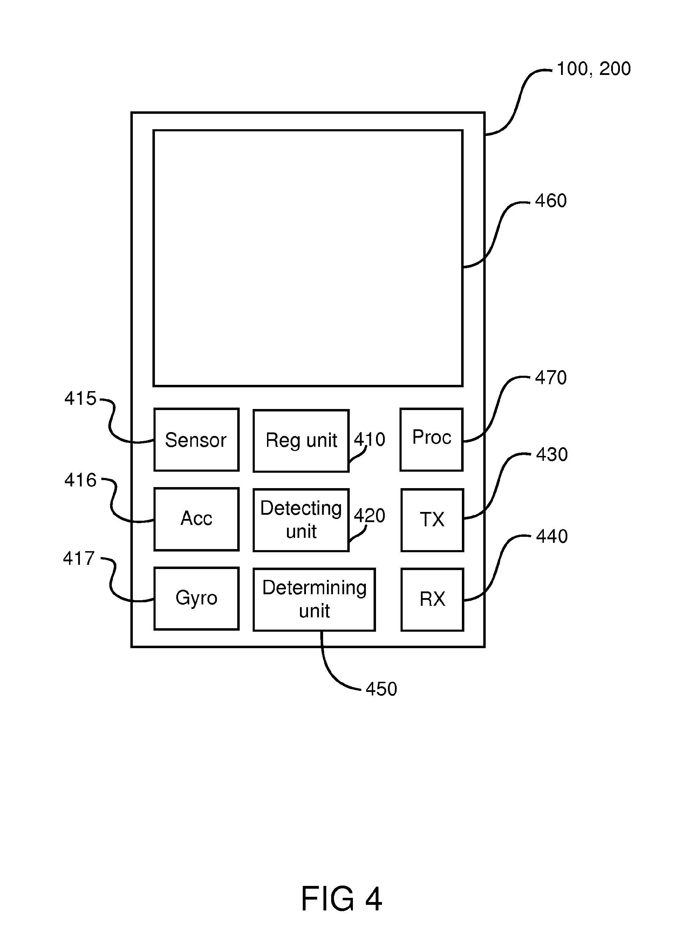

To perform the method actions for recognizing the robbery event of the mobile device 100, 200 described above in relation to Figure 3, the mobile device 100, 200 comprises the following arrangement depicted in **Figure 4****.**

The mobile device 100, 200 comprises a **registering unit 410** adapted to register a mobility pattern behavior of the mobile device 100, 200, based on signals obtained from at least one **mobility sensor 415** in the mobile device 100, 200. The mobility sensor 415 may e.g. be an **accelerometer 416** or a **gyro 417** or any other sensor as described above.

The mobile device 100, 200 further comprises a **detecting unit 420** adapted to detect a disruption from the registered pattern behavior.

In some embodiments the mobile device 200 is an accessory device communicating with a third device 220. In these embodiments, the mobile device 200 further comprises a **sending unit 430** adapted to send to the third device 220 an indication of the detected disruption from the registered pattern behavior and a request for an identification code.

The mobile device 100, 200 may further comprise a **receiving unit 440** adapted to receive a response from the third device 220 comprising the requested identification code.

The mobile device 100, 200 further comprises a **determining unit 450** adapted to determine whether or not the disruption is caused by a robbery event, based on if a correct identification code is received upon request. The mobile device 100, 200 may further comprise **a touch screen 460** where the identification code may be entered.

The determining unit 450 may be adapted to determine whether or not the disruption is caused by a robbery event further is based on if the mobile device 100, 200 is in active mode or not.

The determining unit 450 may further be adapted to determine the speed of the mobile device 100, 200 using the mobility sensor 415 as described above.

The determining unit 450 may further be adapted to determine whether or not the disruption is caused by a robbery event based on if a radio link between the mobile device 100 the second device 120 has changed conditions. How this may be performed is described above.

The mobile device 100, 200 may further comprise a memory, not shown in figure 4, comprising one or more memory units. The memory is arranged to be used to store, data, configurations, schedulings, and applications to perform the methods herein when being executed in the mobile device 100, 200.

Those skilled in the art will also appreciate that the registering unit 410, the detecting unit 420, the sending unit 430, the receiving unit 440 and the determining unit 450, may refer to a combination of analog and digital circuits, and/or one or more **processors 470** configured with software and/or firmware, e.g. stored in the memory, that when executed by the one or more processors 470 will execute the method as described above. One or more of these processors, as well as the other digital hardware, may be included in a single application-specific integrated circuitry (ASIC), or several processors and various digital hardware may be distributed among several separate components, whether individually packaged or assembled into a system-on-a-chip (SoC).

When using the word "comprise" or "comprising" it shall be interpreted as nonlimiting, i.e. meaning "consist at least of".

The embodiments herein are not limited to the above-described preferred embodiments. Various alternatives, modifications and equivalents may be used. Therefore, the embodiments should not be taken as limiting the scope of the invention, which is defined by the appending claims.

## Claims

1. A method in a mobile device (100, 200) for recognizing a robbery of the mobile device (100,200), the method comprising:
*registering (301)* a mobility pattern behavior of the mobile device (100, 200), based on signals obtained from at least one mobility sensor (415) in the mobile device (100, 200),
*detecting (302)* a disruption from the registered pattern behavior,
*determining (305)* whether or not the disruption is caused by a robbery event, based on if a correct identification code is received upon request.

2. The method according to claim 1, wherein determining (305) whether or not the disruption is caused by a robbery event further is based on if the mobile device (100, 200) is in active mode or not.

3. The method according to any of claims 1-2, wherein detecting (302) the disruption further comprises determining the speed of the mobile device (100, 200).

4. The method according to any of claims 1-3, wherein determining (305) whether or not the disruption is caused by a robbery event further is based on if a radio link between the mobile device (100) and a second device (120) has changed conditions.

5. The method according to any of claims 1-4, wherein the mobile device (200) is an accessory device communicating with a third device (220), the method further comprising:
*sending (303)* to the third device (220), an indication of the detected disruption from the registered pattern behavior and a request for an identification code, and
*receiving (304)* a response from the third device (220) comprising the requested identification code.

6. A mobile device (100, 200) for recognizing a robbery of the mobile device (100,200), the mobile device (100, 200) comprising:
*a registering unit (410)* adapted to register a mobility pattern behavior of the mobile device (100, 200), based on signals obtained from at least one mobility sensor (415) in the mobile device (100, 200),
a *detecting unit (420)* adapted to detect a disruption from the registered pattern behavior, and
a *determining unit (450)* adapted to determine whether or not the disruption is caused by a robbery event, based on if a correct identification code is received upon request.

7. The mobile device (100, 200) according to claim 6, wherein the determining unit (450) is further adapted to determine whether or not the disruption is caused by a robbery event further is based on if the mobile device (100, 200) is in active mode or not.

8. The mobile device (100, 200) according to any of claims 6-7, wherein the determining unit (450) is further adapted to determine the speed of the mobile device (100, 200).

9. The mobile device (100, 200) according to any of claims 6-8, wherein the determining unit (450) is further adapted to determine whether or not the disruption is caused by a robbery event further based on if a radio link between the mobile device (100) a second device (120) has changed conditions.

10. The mobile device (200) according to any of claims 6-9, wherein the mobile device (100, 200) is an accessory device communication with a third device (220), the mobile device (100, 200) further comprising:
a *sending unit (430)* adapted to send to the third device (220), an indication of the detected disruption from the registered pattern behavior and a request for an identification code,and
a *receiving unit (440)* adapted to receive a response from the third device (220) comprising the requested identification code.

11. A computer program product loadable into a memory of a computerized device and comprising software code portions adapted to performing any of the actions of claims 1-5 and/or realizing one or more of the features of claims 6-10.
